# EUROPEAN PATENT SPECIFICATION

(11) **EP 4 432 455 B1**
(45) Date of publication and mention of the grant of the patent: **04.02.2026**
(21) Application number: 22899151.9
(22) Date of filing: 29.11.2022
(51) Int. Cl.: H01M 50/54, B23K 20/10, B23K 101/36

(54) **APPARATUS FOR WELDING ELECTRODE TABS, METHOD FOR WELDING ELECTRODE TABS, AND SECONDARY BATTERY**
ELEKTRODENLASCHENSCHWEISSVORRICHTUNG, ELEKTRODENLASCHENSCHWEISSVERFAHREN UND SEKUNDÄRBATTERIE
APPAREIL DE SOUDAGE DE LANGUETTE D'ÉLECTRODE, PROCÉDÉ DE SOUDAGE DE LANGUETTE D'ÉLECTRODE ET BATTERIE SECONDAIRE

(30) Priority: 29.11.2021 KR 20210167738
(43) Date of publication of application: 18.09.2024
(73) Proprietor: LG Energy Solution, Ltd., Seoul 07335 (KR)
(72) Inventor: PARK, Ah Ram, Daejeon 34122 (KR); LEE, Yong Tae, Daejeon 34122 (KR); LEE, Seung Byung, Daejeon 34122 (KR); KIM, Seok Je, Daejeon 34122 (KR)
(74) Representative: Plasseraud IP
(86) International application number: PCT/KR2022/019104
(87) International publication number: WO 2023/096469

(56) References cited:
- CN-A- 102 522 519
- JP-A- 2013 178 997
- KR-A- 20120 010 928
- KR-A- 20170 095 067
- KR-A- 20200 105 272
- KR-A- 20210 138 400
- KR-A- 20210 138 400
- US-A1- 2020 313 145

## Description

### TECHNICAL FIELD

### CROSS-REFERENCE TO RELATED APPLICATIONS

The present application claims the priority of Korean Patent Application Nos. 10-2021-0167738, filed on November 29, 2021, and 10-2022-0163018, filed on November 29, 2022.

### TECHNICAL FIELD

The present invention relates to an apparatus for welding electrode tabs, a method for welding the electrode tabs, and a secondary battery.

### BACKGROUND ART

In general, unlike primary batteries, which are not chargeable, secondary batteries are chargeable and dischargeable, and are widely used in electronic devices such as mobile phones, notebook computers, camcorders, and the like, or electric vehicles, and the like. Particularly, since a lithium secondary battery has larger capacity than a nickelcadmium battery or a nickel-hydrogen battery and has a high energy density, its use has rapidly increased.

The secondary battery may be classified into a cylindrical battery or a prismatic battery, in which an electrode assembly is built in a cylindrical or prismatic metal can, and a pouch-type battery, in which an electrode assembly is built in a pouch-type case provided as an aluminum lamination sheet.

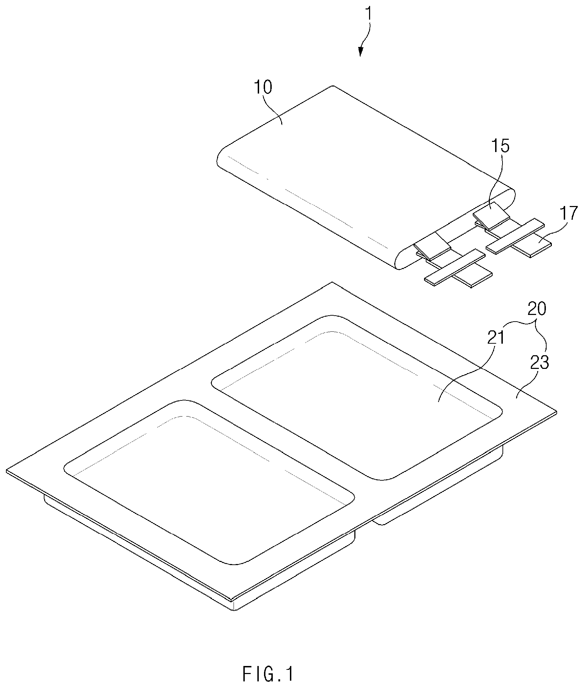

FIG. 1 is a view illustrating an example of a pouch-type secondary battery. A pouch-type secondary battery 1 includes an electrode assembly 10, in which electrodes and separators are alternately stacked, and a pouch 20 (exterior material), into which the electrode assembly is accommodated. Electrode tabs 15 may be connected to the electrodes of the electrode assembly 10. The electrode tabs 15 may be welded to each other on a predetermined area and then connected to an electrode lead 17. The pouch 20 includes a cup part 21 having a recessed shape to accommodate the electrode assembly 10. The cup part 21 of the pouch 20 may be provided in one or two. FIG. 1 illustrates an example in which the pouch 20 includes a left cup part and a right cup part. A peripheral portion 23 (terrace) is formed around a circumference of the cup part 21 by sealing.

However, when pulling force is applied to the electrode tab 15 due to deformation of the peripheral portion 23 of the pouch 20, the electrode tab 15 may be gradually tightened and then disconnected. Alternatively, even when the pulling force is applied to the electrode tab 15 due to expansion of the pouch 20, the electrode tab 15 may be gradually tightened and then disconnected. Such the disconnection is pointed out as a major cause of a fire. Pursuant to recent demands for high capacity and high performance in the pouch-type secondary battery, a length of the peripheral portion 23 is reduced to increase its energy density. Accordingly, a 'length of the electrode tab 15 from the electrode assembly 10 to a welding point of each of the electrode tabs 15' may be reduced, resulting in an increased risk of the disconnection.

Further prior art is described in KR 2020 0105272 A and KR 2021 0138400 A.

### DISCLOSURE OF THE INVENTION

### TECHNICAL PROBLEM

An object of the present invention is to provide an apparatus and method for welding an electrode tab, and a secondary battery, in which a 'length of an electrode tab from an electrode assembly to a welding point of each of electrode tabs' increases to prevent the electrode tabs from being disconnected, even in a pouch-type secondary battery having high capacity and high performance.

### TECHNICAL SOLUTION

In one embodiment, an apparatus for welding an electrode tab relates to an apparatus for welding electrode tabs of a pouch-type battery protruding from an electrode assembly to each other and may include a guide part configured to gather the electrode tabs on a predetermined gathering area, a welding part configured to weld the electrode tabs gathered by the guide part, and a bending part configured to bend the electrode assembly so that a length from the electrode assembly to the gathering area increases in at least a portion of the electrode tabs before being welded by the welding part.

In another embodiment, the guide part may be configured to gather the electrode tabs on the gathering area disposed below a reference plane passing through a center of the electrode assembly in a vertical direction, the reference plane being parallel to the ground when electrodes and separators of the electrode assembly are stacked in the vertical direction perpendicular to the ground, and the bending part may be configured to bend an edge of the electrode assembly, to which the electrode tabs are connected, upward.

In further another embodiment, the bending part may include a support block configured to support one of either bottom and top surfaces of the electrode assembly and a pressing block configured to press the other of the bottom and top surfaces of the electrode assembly toward the one when electrodes and separators of the electrode assembly are stacked in a vertical direction perpendicular to the ground.

In further another embodiment, a point at which the support block may support the one of either the bottom and top surfaces of the electrode assembly is disposed closer to an outside of the electrode assembly than a point at which the pressing block presses the other of the bottom and top surfaces of the electrode assembly.

In further another embodiment, the support block may be configured to support an edge of the electrode assembly, to which the electrode tabs are connected, from below the electrode assembly, and the pressing block may be configured to press the edge, which is supported by the support block, downward from above the electrode assembly so as to perform bending.

In further another embodiment, the support block may include an inclined surface gradually increasing in height toward an outside of the electrode assembly as a surface disposed below the edge.

In further another embodiment, the apparatus may further include a seating part on which the electrode assembly is configured to be seated, wherein when electrodes and separators of the electrode assembly are stacked in a vertical direction perpendicular to the ground, the bending part may include a pressing block disposed inside the seating part to protrude to a top surface of the seating part, on which a bottom surface of the electrode assembly is seated, so as to press an edge of the electrode assembly, to which the electrode tabs are connected, from below.

In further another embodiment, the bending part may further include a support block configured to partially support a top surface of the electrode assembly while being pressed by the pressing block.

In further another embodiment, the bending part may include a support block configured to support an edge of the electrode assembly, to which the electrode tabs are connected, from below when electrodes and separators of the electrode assembly are stacked in a vertical direction perpendicular to the ground.

In further another embodiment, a method for welding an electrode tab relates to a method for welding electrode tabs protruding from an electrode assembly to each other and may include: (a) bending an edge of the electrode assembly, to which the electrode tabs are connected; and (b) welding the electrode tabs in a state in which the electrode assembly is bent, and the method further includes gathering the electrode tabs before the step (a) or between the step (a) and the step (b), wherein the step (a) of bending an edge of the electrode assembly is carried out so that a length from the electrode assembly to a gathering area increases in at least a portion of the electrode tabs before being welded.

In further another embodiment, the method may further include, after the step (b), removing a force applied to the electrode assembly to bend the electrode assembly in the step (a)so as to recover the electrode assembly.

In further another embodiment, the step (a) may include in a state of supporting one of either bottom and top surfaces of the edge, pressing the other of the bottom and top surfaces of the edge toward the one when electrodes and separators of the electrode assembly are stacked in a vertical direction perpendicular to the ground.

In further another embodiment, a point at which the one of the bottom and top surfaces of the edge is supported may be disposed closer to an outside of the electrode assembly than a point at which the other of the bottom and top surfaces of the edge is pressed.

### ADVANTAGEOUS EFFECTS

According to the present invention, since the electrode assembly is bent to increase the length from the electrode assembly to the gathering area (the welding area) in at least a portion of the electrode tabs, in the case of the battery manufactured according to the present invention, even though the pulling force is applied to the electrode tabs due to the deformation of the peripheral portion (terrace) of the pouch, or even though the pulling force is applied to the electrode tabs due to the expansion of the battery, the electrode tabs may not be disconnected.

### BRIEF DESCRIPTION OF THE DRAWINGS

FIG. 1 is a view illustrating an example of a pouch-type secondary battery.
FIGS. 2A to 2D are views for explaining one exemplary process capable of being applied to welding of electrode tabs of a pouch-type secondary battery.
FIG. 3 is a cross-sectional view illustrating a portion of a battery module provided so that several pouch-type batteries are accommodated in a case.
FIG. 4 is a view illustrating an apparatus for welding an electrode tab according to Embodiment 1 of the present invention.
FIG. 5 is a view illustrating an electrode assembly, which is not bent, as compared to the electrode assembly illustrated in FIG. 4.
FIGS. 6a to 6e are views for explaining a method for welding electrode tabs through the welding apparatus of FIG. 4.
FIG. 7 is a view illustrating an apparatus for welding an electrode tab according to Embodiment 2 of the present invention.
FIG. 8 is a view illustrating an apparatus for welding an electrode tab according to Embodiment 3, which is a non-claimed embodiment.
FIG. 9 is a view for explaining a modified example of a secondary battery according to Embodiment 4 of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

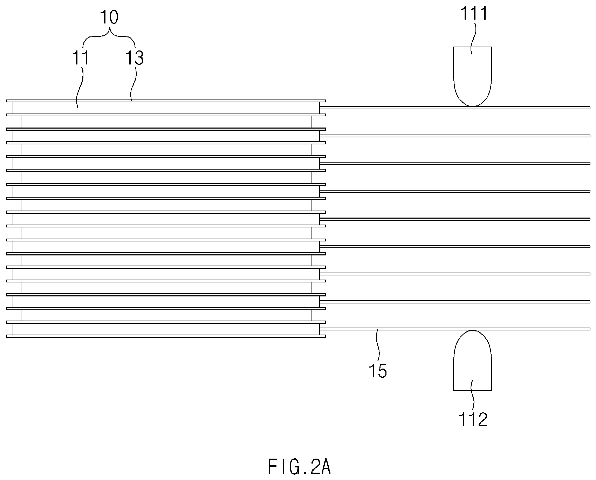

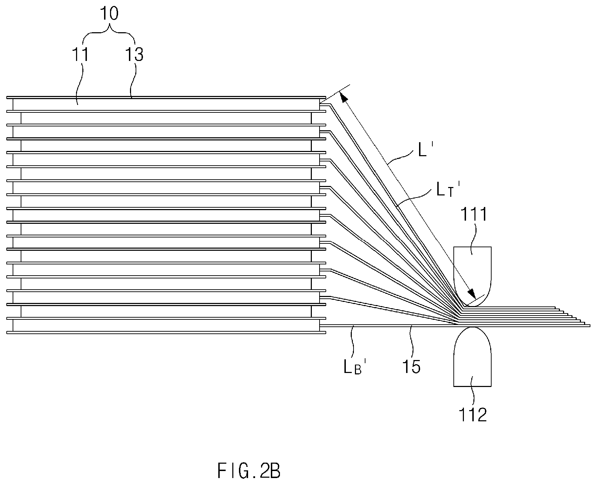

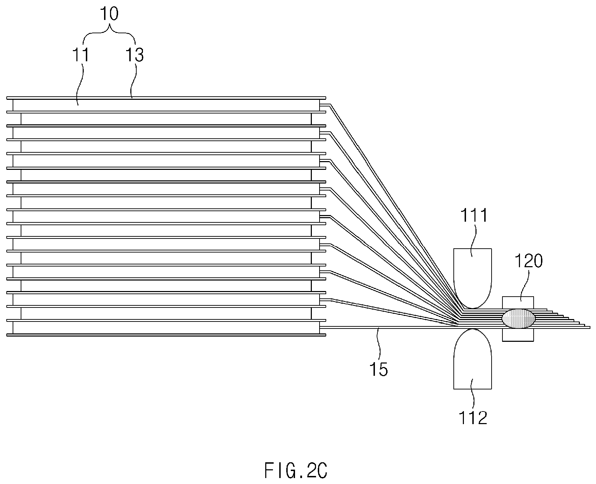

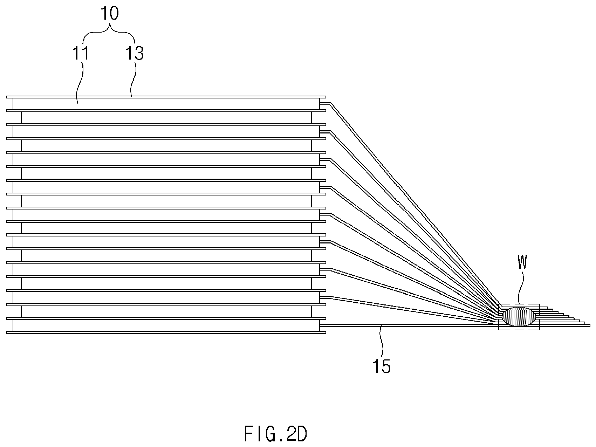

First, a process of welding electrode tabs of a pouch-type secondary battery will be described with reference to FIG. 2. FIG. 2 is a view for explaining one exemplary process capable of being applied to welding of electrode tabs of a pouch-type secondary battery.

First, the electrode assembly 10 is prepared as illustrated in FIG. 2A. The electrode assembly 10 may be provided by stacking electrodes 11 and separators 13. The electrode 11 includes a positive electrode and a negative electrode. An electrode tab 15 may be connected to the electrode 11. For reference, only the negative electrode tab 15 connected to the negative electrode is illustrated in FIG. 2 for convenience of description. The positive electrode tab connected to the positive electrode is provided in the electrode assembly 10 to extend in a direction different from an extension direction of the negative electrode tab 15 and may be welded in the same manner as the negative electrode tab. Next, the electrode tabs 15 are gathered as illustrated in FIG. 2B. For example, the electrode tabs 15 may be gathered by pressing the electrode tabs 15 using two rods 111 and 112. Next, the electrode tabs 15 are welded through a welding part 120 as illustrated in FIG. 2C.

As illustrated in FIG. 2D, an electrode assembly 10 in which the electrode tabs 15 welded to each other on a predetermined welding area W are provided, may be manufactured through these processes. After connecting an electrode lead 17 (see FIG. 1) to the electrode tabs 15, the electrode assembly 10 is accommodated in the pouch 20 (see FIG. 1) to manufacture the pouch-type battery 1.

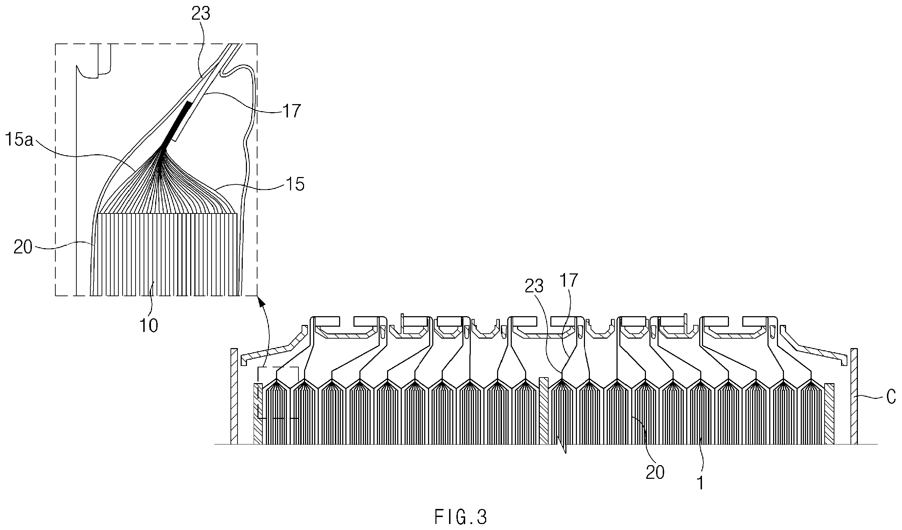

As illustrated in FIG. 3, several pouch-type batteries 1 are accommodated in one case C and manufactured as a battery module. FIG. 3 is a cross-sectional view illustrating a portion of the battery module provided so that the several pouch-type batteries are accommodated in the case.

However, a peripheral portion 23 of the pouch 20 is bent during the manufacturing of the battery module. Deformation of the peripheral portion 23 may cause bending of the electrode lead 17 to apply pulling force to the electrode tabs 15 connected to the electrode lead 17 (for example, see electrode tabs 15a in FIG. 3). The force may tightly pull the electrode tabs 15 to cause disconnection of the electrode tabs 15. The force may be larger in the outer electrode tab 15a. Even when the battery is expanded, the above disconnection problem may occur.

The present invention, which will be described in detail below, is intended to solve the above disconnection problem.

### Embodiment 1

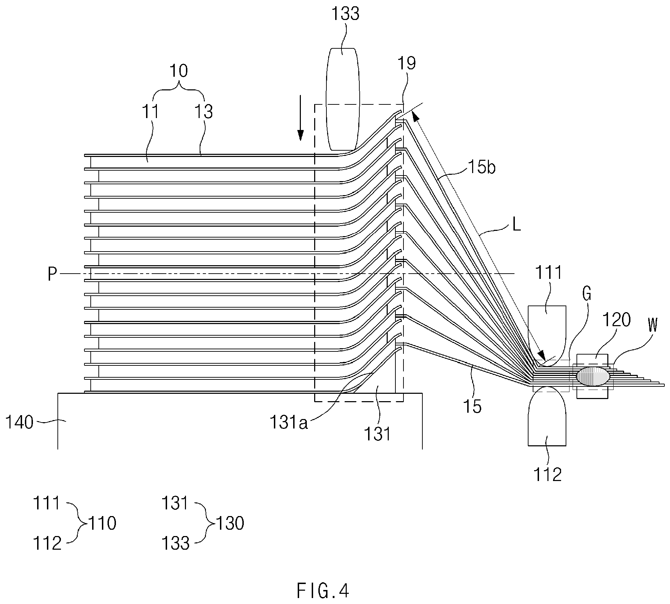

FIG. 4 is a view illustrating an apparatus for welding an electrode tab according to Embodiment 1 of the present invention. An apparatus for welding an electrode tab according to Embodiment 1 of the present invention relates to an apparatus for welding electrode tabs 15 protruding from an electrode assembly 10 to each other and includes a guide part 110, a welding part 120, and a bending part 130 as illustrated in FIG. 4. For reference, hereinafter, it is assumed that electrodes 11 and separators 13 of the electrode assembly 10 are stacked in a vertical direction perpendicular to the ground. However, this is merely an example, and the stacking direction of the electrodes 11 and the separators 13 varies depending on a direction in which the electrode assembly 10 is viewed. The contents of this embodiment may be applied to other embodiments if the contents do not conflict with each other.

The guide part 110 is configured to gather the electrode tabs 15 on a predetermined gathering area G. For example, the guide part 110 includes a first rod 111 disposed above the electrode tabs 15 and a second rod 112 disposed below the electrode tabs 15. The first rod 111 and the second rod 112 move toward each other to press the electrode tabs 15, thereby gathering the electrode tabs 15 on the gathering area G. In this process, the electrode tabs 15 may be bent toward the gathering area G. Here, the gathering area G is an area on which the electrode tabs 15, which are spaced apart from each other, are gathered with each other by the guide part 110. For reference, the guide part is implemented with a first press (not shown) that is stationary and a second press (not shown) that moves toward the first press.

The welding part 120 is configured to weld the electrode tabs 15 gathered by the guide part 110. For example, the welding part 120 includes a horn and an anvil for performing ultrasonic welding. The electrode lead 17 (see FIG. 1) for supplying electricity to the outside of the battery is welded to the electrode tabs 15 welded by the welding part 120. For reference, although the guide part 110 and the welding part 120 are illustrated separately in FIG. 4, the guide part and the welding part are connected to each other. For example, the first rod is connected to the horn of the welding part, and the second rod is connected to the anvil of the welding part.

The bending part 130 is configured to bend the electrode assembly 10. The bending part 130 increases a reference length L of all or portion of the electrode tabs 15 through the bending. Here, the reference length L is a 'length from the electrode assembly 10 to the gathering area G' of the electrode tab 15.

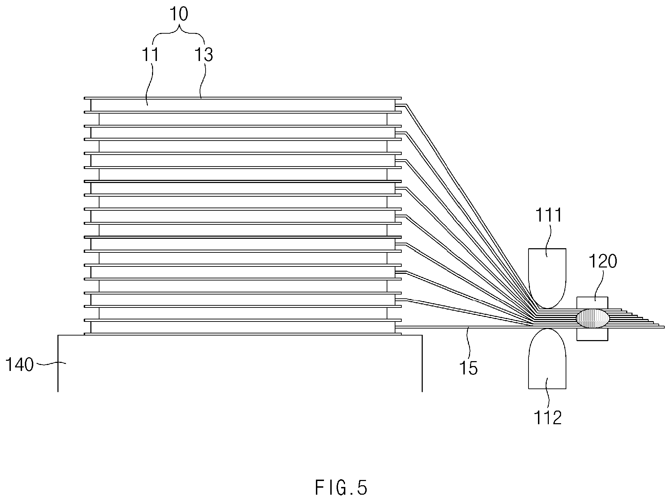

For example, when the electrode assembly 10 of FIG. 5 is bent upward, as illustrated in FIG. 4, since a right edge 19 of the electrode assembly 10 ascends, a left end of the electrode tab 15 (i.e., an end connected to the electrode assembly) is pulled upward to increase in 'length L from the electrode assembly 10 to the gathering area G'. Here, a remaining portion of the electrode tab 15 (e.g., a portion of the electrode tab, which is disposed at a right side of a point pressed by the first and second rods in FIG. 5) may also be pulled to a left side. FIG. 5 is a view illustrating an electrode assembly, which is not bent, in comparison with the electrode assembly illustrated in FIG. 4. For reference, the guide part 110 presses the electrode tabs 15 to a degree that allows the electrode tabs 15 to be pulled. For this, the guide part includes a roller (not shown) at a side that is in contact with the electrode tabs. For example, the roller that is in contact with the electrode tabs to rotate may be provided on a lower end of the first rod and/or an upper end of the second rod.

When the electrode tabs 15 are welded in a bent state or in a state after being bent, as a 'length L from the electrode assembly 10 to the gathering area G' in at least a portion of the electrode tabs 15 increases, a 'length from the electrode assembly 10 to the welding area W' in at least a portion of the electrode tabs 15 increases. As described above, the increase in length prevents the electrode tab 15 from being disconnected by being pulled tightly. This is because, due to the increase in length, the electrode tab 15 is tightly pulled only when the electrode tab 15 is pulled more than before the increase in length. For reference, the force applied to the electrode lead 17 (see FIG. 1) is transmitted to the electrode tabs 15 through a connection point between each of the electrode tabs 15 and the electrode lead 17.

In the apparatus for welding the electrode tab according to this embodiment, before welded by the welding part 120, the length from the electrode assembly 10 to the gathering area G in at least a portion of the electrode tabs 15 increases. As a result, since the apparatus includes the bending part 130 configured to bend the electrode assembly 10, in the case of the battery manufactured by the apparatus for welding the electrode tab according to this embodiment, even if the pulling force is applied to the electrode tabs 15 due to the deformation of the peripheral portion 23 (terrace) of the pouch 20, or even if the pulling force is applied to the electrode tabs 15 due to the expansion of the battery, the electrode tab 15 is not disconnected.

The bending part 130 according to this embodiment determines a degree of bending of the electrode assembly 10 in consideration of the increase in length required to prevent the disconnection from occurring. For example, in the case of the battery module in which the peripheral portion 23 of the pouch 20 is greatly deformed, the bending part 130 further bends the electrode assembly 10. The adjustment is achieved by adjusting a size of a support block 131 to be described later.

The gathering area G is a plane parallel to the ground and may be disposed below a reference plane P passing through a center of the electrode assembly 10 in the vertical direction. The guide part 110 gathers the electrode tabs 15 on the gathering area G. Here, the bending part 130 bends an edge 19 of the electrode assembly 10, to which the electrode tabs 15 are connected, upward. In FIG. 4, the gathering area G disposed to correspond to the lowermost side of the electrode assembly 10 is illustrated.

When the edge 19 of the electrode assembly 10 is bent upward, before the bending, in the electrode tab (e.g., electrode tab 15b) disposed on the plane passing through the gathering area G parallel to the ground or disposed above the plane, the above-described reference length L further increases than that before the bending of the electrode assembly 10. As the gathering area G is disposed lower than a reference plane P, the number of electrode tabs 15 of which the reference length L increases by the bending part 130 increases. For reference, here, upper and lower sides may be relative concepts. For example, when the gathering area is disposed above the reference plane P, the bending part 130 bends the edge 19 of the electrode assembly 10 downward.

The bending part 130 according to this embodiment includes a support block 131 supporting one of either bottom and top surfaces of the electrode assembly 10. The bending part 130 according to this embodiment includes a pressing block 133 that presses the other of the bottom and top surfaces of the electrode assembly 10 toward the above-described one. The pressing block 133 is configured to move in the vertical direction so as to perform the pressing. In FIG. 4, the support block supporting the bottom surface of the electrode assembly 10 and the pressing block 133 pressing the top surface of the electrode assembly 10 toward the bottom surface are illustrated.

Since the electrode assembly 10 is bent only through the supporting by the support block 131, the bending part 130 may include only the support block 131. However, since the electrode assembly 10 is more easily bent when the electrode assembly 10 is pressed with the pressing block 133 in a state of being supported by the support block 131, the bending part 130 includes all of the support block 131 and the pressing block 133.

A point at which the support block 131 supports the electrode assembly 10 is closer to an outer side of the electrode assembly 10 than a point at which the pressing block 133 presses the electrode assembly 10. For example, in FIG. 4, a point at which the support block 131 supports the bottom surface of the electrode assembly 10 is disposed at a further right side than a point at which the pressing block 133 presses the top surface of the electrode assembly 10. Through this positional relationship, the bending part 130 according to this embodiment effectively bends the edge 19 of the electrode assembly 10 upward or downward.

As illustrated in FIG. 4, the support block 131 is configured to support the edge 19 of the electrode assembly 10 to which the electrode tabs 15 are connected from below. The pressing block 133 is configured to press the edge 19 of the electrode assembly 10 supported by the support block 131 downward from above so as to perform the bending.

The support block 131 is implemented in various shapes capable of supporting the electrode assembly 10. For example, as illustrated in FIG. 4, the support block 131 is implemented in a shape including an inclined surface 131a supporting a lower side of the edge 19 of the electrode assembly 10. The inclined surface 131a of the support block 131 is a surface disposed below the edge 19 and gradually increasing in height toward the outside of the electrode assembly 10 (e.g., the right side of FIG. 4). When the support block 131 includes the inclined surface 131a, it is possible to support the edge 19 of the electrode assembly 10 while preventing the edge 19 of the electrode assembly 10 from being damaged. The pressing block 133 may also be implemented in various shapes capable of pressing the electrode assembly 10. In FIG. 4, a rod-shaped pressing block 133 is illustrated.

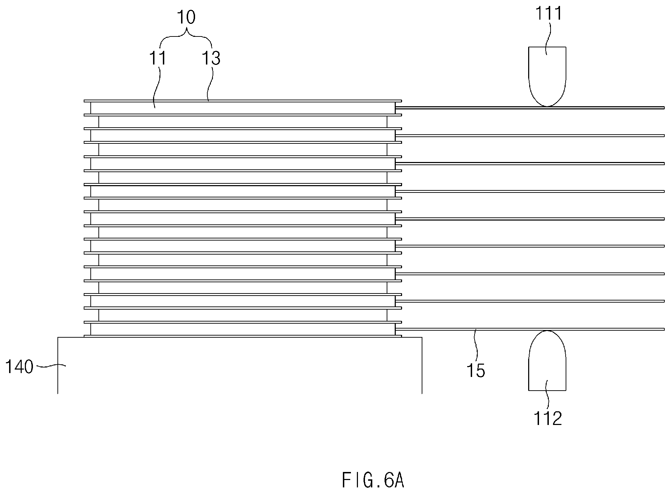

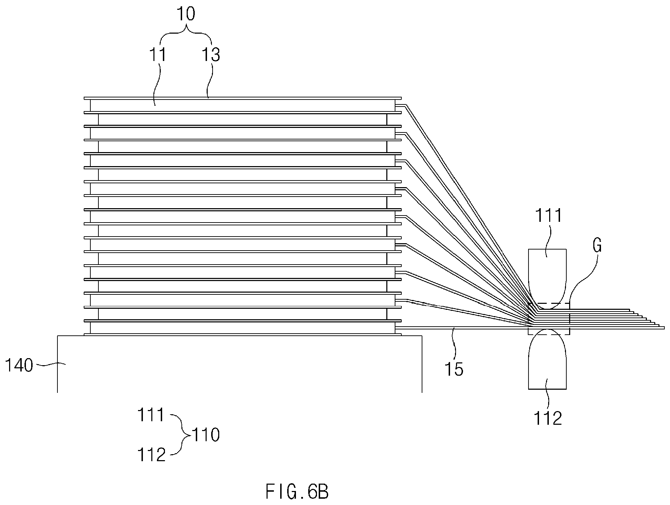

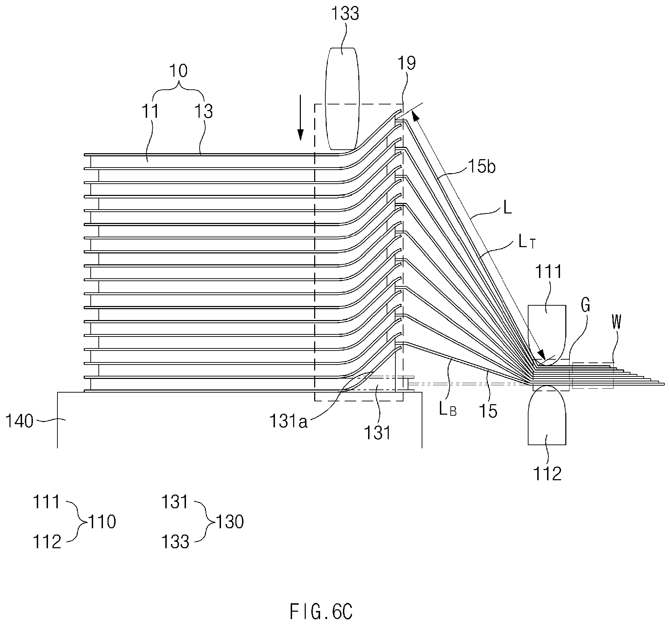

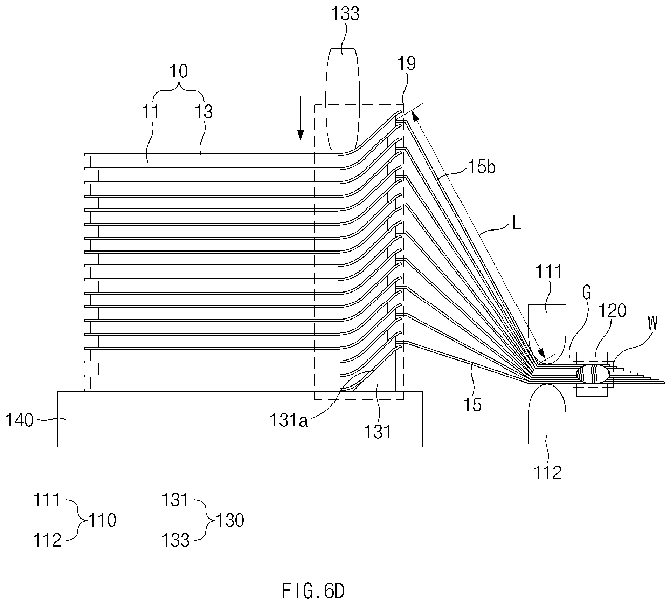

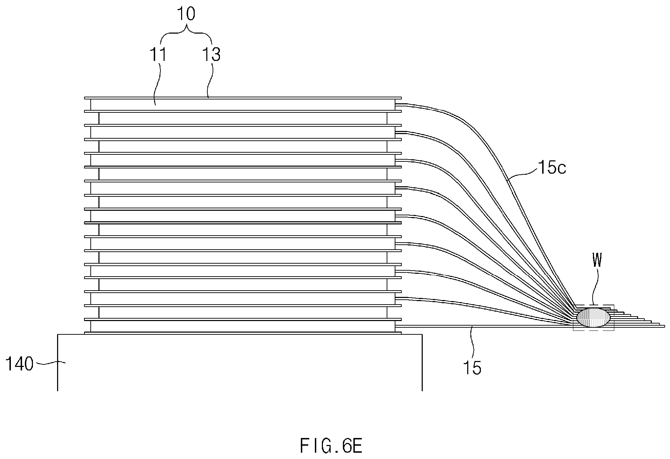

Hereinafter, a process of welding the electrode tabs 15 through the welding apparatus according to this embodiment will be described with reference to FIG. 6. FIGS. 6a to 6e are views for explaining a method for welding electrode tabs through the welding apparatus of FIG. 4.

First, an electrode assembly 10 is prepared as illustrated in FIG. 6A. Here, the electrode assembly 10 is seated on a seating part 140. The seating part 140 may be a jig or die on which the electrode assembly 10 is seated.

Next, the electrode tabs 15 are gathered as illustrated in FIG. 6B. This is implemented by an operation of the guide part 110. For example, in a state in which the second rod 112 supports the electrode tabs 15 from below, the first rod 111 presses the electrode tabs 15 below from above so that the electrode tabs 15 are gathered in the gathering area G.

Next, the electrode assembly 10 is bent as illustrated in FIG. 6C. This is implemented by an operation of the bending part 130. The bending part 130 bends an edge 19 of the electrode assembly 10 to which the electrode tab 15 is connected. For example, in the state in which the support block 131 supports a right bottom surface of the edge 19, the pressing block 133 presses a right top surface of the edge 19 to bend the edge 19 of the electrode assembly 10. For reference, when the electrode assembly 10 is seated on the seating part 140, the support block 131 may already be disposed on a top surface of the seating part 140. Alternatively, the support block may be configured to protrude from the inside of the seating part to the top surface of the seating part.

Next, as illustrated in FIG. 6D, the electrode tabs 15 are welded through the welding part 120 in the state in which the electrode assembly 10 is bent.

Through this process, in the case of at least a portion of the electrode tabs 15, the 'length L from the electrode assembly 10 to the gathering area G' increases, and in this state, the electrode tabs 15 are welded to each other. As a result, in the case of at least a portion of the electrode tabs 15 (e.g., the electrode tab 15c), as illustrated in FIG. 6E, the welding area W increases in comparison to a case in which there is no bending process. For reference, although a process of bending the electrode assembly 10 after gathering the electrode tabs 15 is illustrated in FIG. 6, it is also possible to gather the electrode tabs 15 after bending the electrode assembly 10.

After the welding, the force applied to the electrode assembly 10 so as to bend the electrode assembly 10 is removed. For example, the support block 131 is removed, and the pressing block 133 moves upward. The electrode assembly 10 returns to its original shape by removing the force. Since each of the electrodes 11 and the separators 13, which constitute the electrode assembly 10, has a certain degree of elasticity, each of the electrodes 11 and the separators 13 are bent by applying the force due to the bending part 130 and return to its original shape by removing the force.

### Embodiment 2

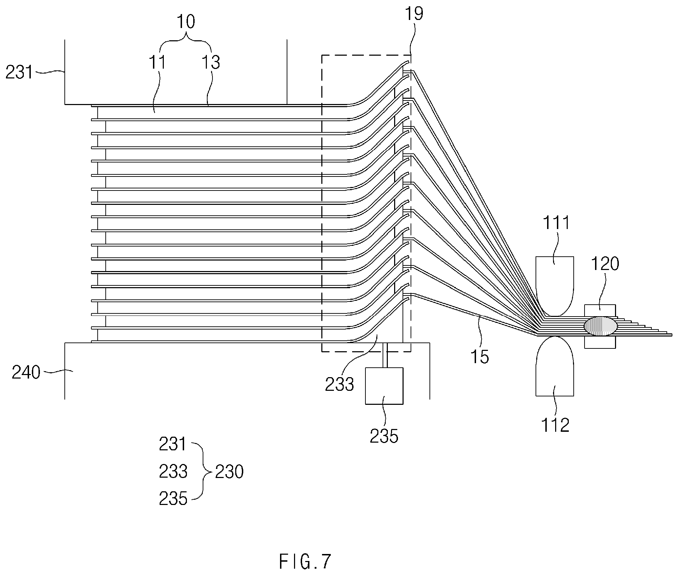

FIG. 7 is a view illustrating an apparatus for welding an electrode tab according to Embodiment 2 of the present invention. The welding apparatus according to Embodiment 2 is different from the welding device according to Embodiment 1 in a support block and a pressing block. Hereinafter, the support block and the pressing block will be mainly described. For reference, the contents of this embodiment may be applied to other embodiments if the contents do not conflict with each other.

A bending part 230 according to this embodiment includes a pressing block 233 protruding from a seating part 240 on which the electrode assembly 10 is seated. The pressing block 233 is disposed inside the seating part 240 and protrudes to a top surface of the seating part 240, on which a bottom surface of the electrode assembly 10 is seated, to press the electrode assembly 10. Here, the pressing block 233 presses an edge 19 of the electrode assembly 10, to which the electrode tabs 15 are connected to each other, from below. When the bending part 230 is configured as described above, since the electrode assembly 10 is seated on the seating part 240, and then, the pressing block 233 protrudes, the pressing by the pressing block 233 is performed when necessary (for example, after the electrode assembly is seated on the seating part) while the electrode assembly 10 smoothly moves.

The bending part 230 according to this embodiment includes a driving part 235 for vertical movement of the pressing block 233. For example, the driving part 235 is a cylinder from which a cylinder rod is drawn in or out.

The bending part 230 according to this embodiment includes a support block 231 to support the electrode assembly 10 during the pressing by the pressing block 233. The support block 231 is configured to partially support a top surface of the electrode assembly 10. The support block 231 supports an area other than an area pressed by the pressing block 233 so as not to interfere with the bending of the electrode assembly 10. For example, when the pressing block 233 presses the edge 19 of the electrode assembly 10, the support block 231 is configured to support the top surface of the electrode assembly 10 on an area except for the edge 19 of the electrode assembly 10. The support block 231 is configured to move in a vertical direction so as not to interfere with the seating of the electrode assembly 10.

### Embodiment 3

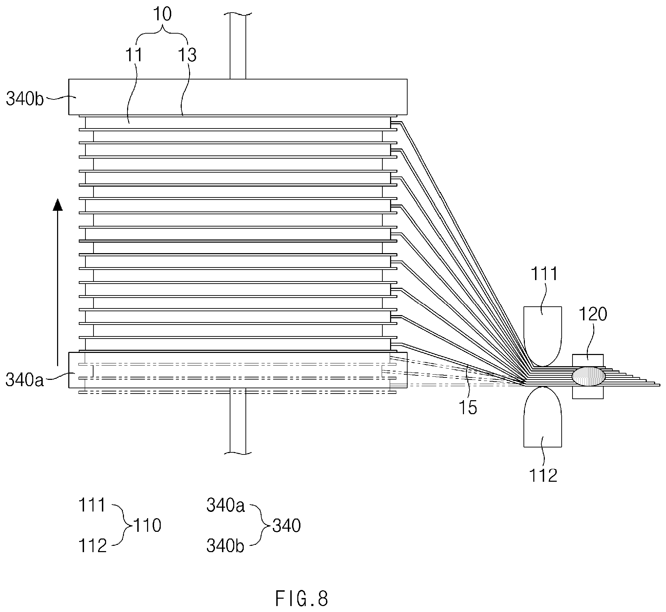

FIG. 8 is a view illustrating an apparatus for welding an electrode tab according to Embodiment 3, which is a non-claimed embodiment. A welding apparatus according to Embodiment 3 is different from the welding apparatus according to the above-described embodiments in a method of increasing a 'length from an electrode assembly to a gathering area' on an electrode tab. For reference, the contents of this embodiment may be applied to other embodiments if the contents do not conflict with each other.

An apparatus for welding an electrode tab according to this embodiment relates to an apparatus for welding electrode tabs protruding from the electrode assembly and includes a guide part 110, a welding part 120, and a moving part 340. The guide part 110 and the welding part 120 may be the same as the guide part 110 and the welding part 120 described above.

The moving part 340 is configured to move the electrode assembly 10 with respect to the guide part 110 in a direction (vertical direction in FIG. 8) corresponding to a stacking direction of electrodes 11 and separators 13 of the electrode assembly 10. Due to the relative movement, the moving part 340, for example, moves the electrode assembly 10 in a direction away from the guide part 110 at an upper side in FIG. 8 and move the guide part 110 in a direction away from the electrode assembly 10 at a lower side in FIG. 8. In FIG. 8, the moving part 340 configured to move the electrode assembly 10 is illustrated.

Since the moving part 340 moves the electrode assembly 10 as a whole with respect to the guide part 110 before welded by the welding part 120, a length 'from the electrode assembly 10 to a gathering area (reference symbol G of FIG. 6B)' in at least a portion of the electrode tabs 15 increases, similar to a case in which the electrode assembly 10 is bent in the foregoing embodiments. In an embodiment of FIG. 8, a length of each of all electrode tabs 15 increases.

The moving part 340 may include a seating part 340a configured to move along a stacking direction of the electrode assembly 10 in a state in which the electrode assembly 10 is seated. The moving part 340 includes a support part 340b supporting the electrode assembly 10 in a direction opposite to the seating part 340a. The moving part 340 stably moves the electrode assembly 10 through the support part 340b. In a state in which the electrode assembly 10 is pressed toward the seating part 340a, the support part 340b is configured to move in a manner interlocked with the movement of the seating part 340a.

### Embodiment 4

Embodiment 4 relates to a secondary battery, and relates to a secondary battery manufactured by the above-described welding apparatus/method. However, the apparatus/method for manufacturing the secondary battery according to Embodiment 4 is not limited to the apparatus/method described above.

As illustrated in FIG. 6C, the secondary battery according to this embodiment includes an electrode assembly 10 and electrode tabs 15 protruding from the electrode assembly 10. In addition, the secondary battery according to this embodiment may include an exterior material 20 (see FIG. 1) accommodating the electrode assembly 10 and the electrode tabs 15, and an electrode lead 17 electrically connected to the electrode tabs 15 (see FIG. 1). A portion of the electrode lead 17 is exposed to the outside of the exterior material 20.

The electrode tabs 15 are coupled to each other in a predetermined bonding area. The bonding area is the above-described welding area W.

A length of at least a portion of the electrode tabs 15 'from the electrode assembly 10 to the bonding area W' (see FIG. 6E) is longer than a predetermined reference length. Here, the length 'from the electrode assembly 10 to the bonding area W' is the sum of a length L from the electrode assembly 10 to the above-mentioned gathering area G, and a length from the gathering area G to the bonding area W (welding area). The reference length is a minimum length from the electrode assembly 10 to the bonding area W (see FIG. 2D). The reference length is determined for each individual electrode tab. For example, the reference length is calculated as a straight-line length from a point at which the corresponding electrode tab protrudes from the electrode assembly 10 to a point at which the corresponding electrode tab is bonded to another electrode tab. Here, if necessary for calculating the exact straight-line length, the reference length is calculated in a state in which the electrode tab is pulled tightly, for example, in a state in which a bonding point is pulled in a direction away from the electrode assembly.

For example, the 'sum of a length L_{T} from the electrode assembly 10 to the gathering area G and a length from the gathering area G to the welding area W' on the uppermost electrode tab of the electrode tabs of FIG. 6C is greater than the 'sum of a length L_{T}' from the electrode assembly 10 to the gathering area and a length from the gathering area to the welding area (see FIG. 2D)' on the electrode tab disposed at the uppermost side among the electrode tabs of FIG. 2B. Similarly, the 'sum of a length L_{B} from the electrode assembly 10 to the gathering area G and a length from the gathering area G to the welding area W' on the lowermost electrode tab of the electrode tabs of FIG. 6C is greater than the 'sum of a length L_{B}' from the electrode assembly 10 to the gathering area and a length from the gathering area to the welding area' on the electrode tab disposed at the lowermost side among the electrode tabs of FIG. 2B. For reference, in the above examples, the 'lengths from the gathering area to the welding area' is the same.

The incremental length of at least a portion of the electrode tabs 15 'from the electrode assembly 10 to the bonding area W' increases as the electrode tab is disposed farther from the bonding area W along the stacking direction (vertical direction in FIG. 6C) of the electrodes and the separators. In FIG. 6C, since the bonding area W is disposed corresponding to the lowermost side of the electrode assembly 10 in the vertical direction, the incremental length of the lowermost electrode tab is the shortest, and the incremental length of the uppermost electrode tab is the longest.

Here, the incremental length is a value obtained by subtracting the above-described reference length from the length from the electrode assembly 10 to the bonding area W. For example, the incremental length of the lowermost electrode tab in FIG. 6C is a value obtained by subtracting 'the length L_{B}' from the electrode assembly 10 to the gathering area + the length from the gathering area to the bonding area' in FIG. 2B from 'the length L_{B} from the electrode assembly 10 to the gathering area G + the length from the gathering area G to the bonding area W'.

In the case of the embodiment of FIG. 6C, the bonding area W is disposed corresponding to the lowermost electrode tab of the electrode assembly 10 based on the vertical direction (the stacking direction of the electrodes and the separators). Here, the incremental length of each of the electrode tabs may be longer as the electrode tab is disposed vertically upward. For example, the incremental length of the electrode tab disposed at the lowest side is the shortest, and the incremental length of the electrode tab disposed at the uppermost side is the longest. For reference, FIG. 6C may be applied to a pouch-type battery in which only one cup part for accommodating an electrode assembly is formed.

In FIG. 6C, when a horizontal length of the support block 131 (length of a surface horizontally disposed on a top surface of the seating part) is X (unit is mm, hereinafter the same), and a vertical length of the support block 131 (length of a surface perpendicular to the top surface of the seating part) is Y, the length of the 'electrode assembly 10 to the bonding area W' (see the 'total length' in the table below) and the incremental length of the electrode tabs, which are respectively disposed at the lower and uppermost sides are as shown in the table below. For reference, when Y is "0", since there is no bending by the support block 131, as in the case of FIG. 2B or 2D, it may be a criterion for calculating the incremental length. In addition, the table below relates to a positive electrode tab when a straight-line distance in the horizontal direction from the electrode assembly to the gathering area G (position at which the guide part is disposed) is 2.5 mm, and a thickness of the electrode assembly is 10 mm.

**[Table 1]**

| Lowermost electrode tab | | | | Uppermost electrode tab | | | |
|---|---|---|---|---|---|---|---|
| X | Y | Total length | Incremental length | X | Y | Total length | Incremental length |
| 3 | 0 | 5.50 | - | 3 | 0 | 8.59 | - |
| 3 | 3 | 8.15 | 2.65 | 3 | 3 | 12.62 | 4.03 |
| 3 | 4 | 9.72 | 4.22 | 3 | 4 | 14.34 | 5.75 |
| 3 | 5 | 11.42 | 5.92 | 3 | 5 | 16.14 | 7.55 |
| 3 | 6 | 13.21 | 7.71 | 3 | 6 | 17.99 | 9.40 |
| 3 | 7 | 15.05 | 9.55 | 3 | 7 | 19.87 | 11.28 |
| 4 | 0 | 6.50 | - | 4 | 0 | 9.59 | - |
| 4 | 3 | 8.91 | 2.41 | 4 | 3 | 13.38 | 3.79 |
| 4 | 4 | 10.37 | 3.87 | 4 | 4 | 15.00 | 5.41 |
| 4 | 5 | 11.99 | 5.49 | 4 | 5 | 16.71 | 7.12 |
| 4 | 6 | 13.71 | 7.21 | 4 | 6 | 18.49 | 8.90 |
| 4 | 7 | 15.50 | 9.00 | 4 | 7 | 20.32 | 10.73 |

As summarized in the table above, when X and Y are the same conditions, the incremental length of the upper electrode tab is greater than the incremental length of the lower electrode tab. In addition, in the case of the electrode tabs at the same position, if X is the same, the incremental length of the electrode tab increases as Y increases, and this is equally applied to the lower electrode tab and the upper electrode tab. It is seen that the incremental length increases as the edge of the electrode assembly is bent to be higher. In addition, in the electrode tabs at the same position, if Y is the same, the incremental length increases as an angle between an inclined surface 131a of the support block 131 and the bottom surface of the support block 131 increases (for example, when X is 3, and Y is 4, and when X is 4, and Y is 4), and this may be equally applied to the lower electrode tab and the upper electrode tab. It is seen that the incremental length increases as the edge of the electrode assembly is bent to be inclined.

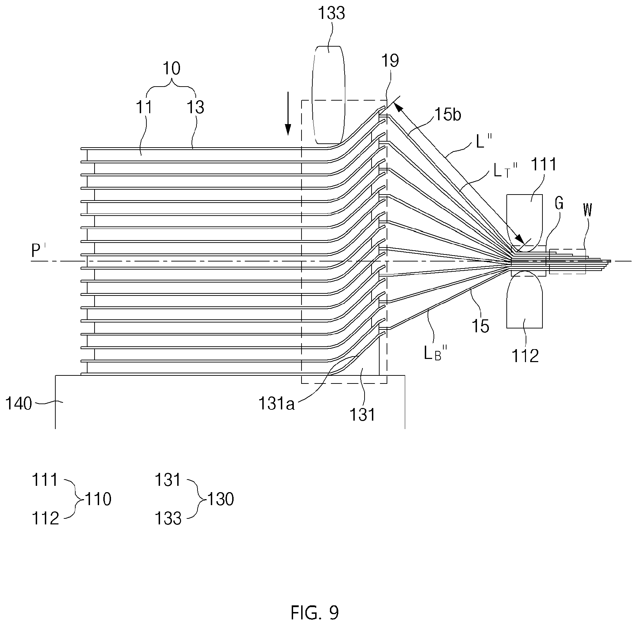

The secondary battery according to Embodiment 4 may be modified as illustrated in FIG. 9. FIG. 9 is a view for explaining a modified example of a secondary battery according to Embodiment 4 of the present invention.

In the case of the secondary battery described in FIG. 9, when the electrodes and the separators of the electrode assembly are stacked in the vertical direction (vertical directions in FIG. 9), the electrode tabs disposed above a reference plane P' passing through the bonding area W and perpendicular to the vertical direction and the electrode tabs disposed below the reference plane P' have asymmetrical lengths with respect to the reference plane. For example, in the case of the secondary battery manufactured as illustrated in FIG. 9, when the support block 131 is removed, and the electrode assembly returns to its original shape, the uppermost electrode tab and the lowermost electrode tab with respect to the reference plane P' disposed at an intermediate height of the electrode assembly may be symmetrically disposed, but a length L_{T}" of the uppermost electrode tab is greater than a length L_{B}" of the lowermost electrode tab.

The above-disclosed subject matter is to be considered illustrative, and not restrictive, and the appended claims are intended to cover all such modifications, enhancements, and other embodiments, which fall within the scope of the present invention.

Thus, the embodiment of the present invention is to be considered illustrative, and not restrictive, and the present invention is not limited to the foregoing embodiment.

Therefore, the scope of the present invention is defined not by the detailed description of the invention but by the appended claims.

## Claims

1. An apparatus for welding electrode tabs (15) of a pouch-type battery protruding from an electrode assembly (10) to each other, the apparatus comprising:
a guide part (110) configured to gather the electrode tabs (15) on a predetermined gathering area;
a welding part (120) configured to weld the electrode tabs (15) gathered by the guide part (110),
**characterized in that** a bending part (130) is provided which is configured to bend the electrode assembly (10) so that a length from the electrode assembly (10) to a gathering area (G) increases in at least a portion of the electrode tabs (15) before being welded by the welding part (120).

2. The apparatus of claim 1, wherein the guide part (110) is configured to gather the electrode tabs (15) on the gathering area (G) disposed below a reference plane passing through a center of the electrode assembly (10) in a vertical direction, the reference plane being parallel to the ground when electrodes (11) and separators (13) of the electrode assembly (10) are stacked in the vertical direction perpendicular to the ground, and
the bending part (130) is configured to bend an edge of the electrode assembly (10), to which the electrode tabs (15) are connected, upward.

3. The apparatus of claim 1, wherein the bending part (130) comprises a support block (131) configured to support one of either bottom and top surfaces of the electrode assembly (10) and a pressing block (133) configured to press the other of the bottom and top surfaces of the electrode assembly (10) toward the one when electrodes (11) and separators (13) of the electrode assembly (10) are stacked in a vertical direction perpendicular to the ground.

4. The apparatus of claim 3, wherein a point at which the support block (131) supports the one of either the bottom and top surfaces of the electrode assembly (10) is disposed closer to an outside of the electrode assembly (10) than a point at which the pressing block (133) presses the other of the bottom and top surfaces of the electrode assembly (10).

5. The apparatus of claim 3, wherein the support block (131) is configured to support an edge (19) of the electrode assembly (10), to which the electrode tabs (15) are connected, from below the electrode assembly (10), and
the pressing block (133) is configured to press the edge (19), which is supported by the support block (131), downward from above the electrode assembly (10) so as to perform bending.

6. The apparatus of claim 5, wherein the support block (131) comprises an inclined surface (131a) gradually increasing in height toward an outside of the electrode assembly (10) as a surface disposed below the edge (19).

7. The apparatus of claim 1, further comprising a seating part (140) on which the electrode assembly (10) is configured to be seated,
wherein when electrodes (11) and separators (13) of the electrode assembly (10) are stacked in a vertical direction perpendicular to the ground, the bending part (230) comprises a pressing block (233) disposed inside the seating part (240) to protrude to a top surface of the seating part (240), on which a bottom surface of the electrode assembly (10) is seated, so as to press an edge (19) of the electrode assembly (10), to which the electrode tabs (15) are connected, from below.

8. The apparatus of claim 7, wherein the bending part (230) further comprises a support block (231) configured to partially support a top surface of the electrode assembly (10) while being pressed by the pressing block (233).

9. The apparatus of claim 1, wherein the bending part (230) comprises a support block (231) configured to support an edge (19) of the electrode assembly (10), to which the electrode tabs (15) are connected, from below when electrodes (11) and separators (13) of the electrode assembly (10) are stacked in a vertical direction perpendicular to the ground.

10. A method for welding electrode tabs (15) protruding from an electrode assembly (10) to each other, the method comprising:
(a) bending an edge (19) of the electrode assembly (10), to which the electrode tabs (15) are connected; and
(b) welding the electrode tabs (15) in a state in which the electrode assembly (10) is bent,
wherein the method further comprises:
gathering the electrode tabs (15) before the step (a) or between the step (a) and the step (b),
wherein the step (a) of bending an edge (19) of the electrode assembly (10) is carried out so that a length from the electrode assembly (10) to a gathering area (G) increases in at least a portion of the electrode tabs (15) before being welded.

11. The method of claim 10, further comprising, after the step (b), removing a force applied to the electrode assembly to bend the electrode assembly (10) in the step (a) so as to recover the electrode assembly (10).

12. The method of claim 10, wherein the step (a) comprises in a state of supporting one of either bottom and top surfaces of the edge (19), pressing the other of the bottom and top surfaces of the edge (19) toward the one when electrodes (11) and separators (13) of the electrode assembly (10) are stacked in a vertical direction perpendicular to the ground.

13. The method of claim 12, wherein a point at which the one of the bottom and top surfaces of the edge (19) is supported is disposed closer to an outside of the electrode assembly (10) than a point at which the other of the bottom and top surfaces of the edge (19) is pressed.

## Patentansprüche

1. Vorrichtung zum Aneinanderschweißen von Elektrodenlaschen (15) einer Beutelbatterie, die aus einer Elektrodenanordnung (10) herausragen, wobei die Vorrichtung umfasst:
ein Führungsteil (110), das dazu ausgerichtet ist, die Elektrodenlaschen (15) auf einem vorbestimmten Sammelbereich zu sammeln;
ein Schweißteil (120), das dazu ausgerichtet ist, die durch das Führungsteil (110) gesammelten Elektrodenlaschen (15) zu verschweißen; und
**dadurch gekennzeichnet, dass** ein Biegeteil (130) vorgesehen ist, das dazu ausgerichtet ist, die Elektrodenanordnung (10) so zu biegen, dass eine Länge von der Elektrodenanordnung (10) zu einem Sammelbereich (G) in mindestens einem Abschnitt der Elektrodenlaschen (15) zunimmt, bevor diese durch das Schweißteil (120) verschweißt werden.

2. Vorrichtung nach Anspruch 1, wobei das Führungsteil (110) dazu ausgerichtet ist, die Elektrodenlaschen (15) auf dem Sammelbereich (G) zu sammeln, der unterhalb einer Referenzebene angeordnet ist, die in vertikaler Richtung durch eine Mitte der Elektrodenanordnung (10) verläuft, wobei die Referenzebene parallel zum Boden ist, wenn Elektroden (11) und Separatoren (13) der Elektrodenanordnung (10) in vertikaler Richtung senkrecht zum Boden gestapelt sind, und
das Biegeteil (130) dazu ausgerichtet ist, eine Kante der Elektrodenanordnung (10), mit der die Elektrodenlaschen (15) verbunden sind, nach oben zu biegen.

3. Vorrichtung nach Anspruch 1, wobei das Biegeteil (130) einen Stützblock (131) umfasst, der dazu ausgerichtet ist, dass er entweder Unterseite oder Oberseite der Elektrodenanordnung (10) stützt, und einen Druckblock (133), der dazu ausgerichtet ist, dass er die andere von Unterseite und Oberseite der Elektrodenanordnung (10) in Richtung der einen drückt, wenn Elektroden (11) und Separatoren (13) der Elektrodenanordnung (10) in vertikaler Richtung senkrecht zum Boden gestapelt sind.

4. Vorrichtung nach Anspruch 3, wobei ein Punkt, an dem der Stützblock (131) die eine von Unterseite und Oberseite der Elektrodenanordnung (10) stützt, näher an einer Außenseite der Elektrodenanordnung (10) angeordnet ist als ein Punkt, an dem der Druckblock (133) die andere von Unterseite und Oberseite der Elektrodenanordnung (10) drückt.

5. Vorrichtung nach Anspruch 3, wobei der Stützblock (131) dazu ausgerichtet ist, dass er eine Kante (19) der Elektrodenanordnung (10), mit der die Elektrodenlaschen (15) verbunden sind, von unterhalb der Elektrodenanordnung (10) stützt, und
der Druckblock (133) so konfiguriert ist, dass er die Kante (19), die vom Stützblock (131) gestützt wird, von oberhalb der Elektrodenanordnung (10) nach unten drückt, um eine Biegung durchzuführen.

6. Vorrichtung nach Anspruch 5, wobei der Stützblock (131) eine geneigte Fläche (131a) umfasst, deren Höhe zu einer Außenseite der Elektrodenanordnung (10) hin allmählich zunimmt, als eine Fläche, die unterhalb der Kante (19) angeordnet ist.

7. Vorrichtung nach Anspruch 1, die ferner ein Sitzteil (140) umfasst, auf dem die Elektrodenanordnung (10) so angeordnet ist, dass sie aufgesetzt werden kann,
wobei, wenn Elektroden (11) und Separatoren (13) der Elektrodenanordnung (10) in einer vertikalen Richtung senkrecht zum Boden gestapelt sind, das Biegeteil (230) einen Druckblock (233) umfasst, der innerhalb des Sitzteils (240) angeordnet ist, um zu einer Oberseite des Sitzteils (240) vorzustehen, auf der eine Unterseite der Elektrodenanordnung (10) sitzt, um eine Kante (19) der Elektrodenanordnung (10), mit der die Elektrodenlaschen (15) verbunden sind, von unten zu drücken.

8. Vorrichtung nach Anspruch 7, wobei das Biegeteil (230) ferner einen Stützblock (231) umfasst, der dazu ausgerichtet ist, eine Oberseite der Elektrodenanordnung (10) teilweise zu stützen, während sie durch den Druckblock (233) gedrückt wird.

9. Vorrichtung nach Anspruch 1, wobei das Biegeteil (230) einen Stützblock (231) umfasst, der dazu ausgerichtet ist, eine Kante (19) der Elektrodenanordnung (10), mit der die Elektrodenlaschen (15) verbunden sind, von unten zu stützen, wenn Elektroden (11) und Separatoren (13) der Elektrodenanordnung (10) in einer vertikalen Richtung senkrecht zum Boden gestapelt sind.

10. Verfahren zum Aneinanderschweißen von Elektrodenlaschen (15), die aus einer Elektrodenanordnung (10) herausragen, wobei das Verfahren umfasst:
(a) Biegen einer Kante (19) der Elektrodenanordnung (10), mit der die Elektrodenlaschen (15) verbunden sind; und
(b) Schweißen der Elektrodenlaschen (15) in einem Zustand, in dem die Elektrodenanordnung (10) gebogen ist,
wobei das Verfahren ferner umfasst:
Sammeln der Elektrodenlaschen (15) vor dem Schritt (a) oder zwischen dem Schritt (a) und dem Schritt (b),
wobei der Schritt (a) des Biegens einer Kante (19) der Elektrodenanordnung (10) so durchgeführt wird, dass eine Länge von der Elektrodenanordnung (10) zu einem Sammelbereich (G) in mindestens einem Abschnitt der Elektrodenlaschen (15) vor dem Schweißen zunimmt.

11. Verfahren nach Anspruch 10, das ferner nach dem Schritt (b) das Entfernen einer zum Biegen der Elektrodenanordnung (10) im Schritt (a) auf die Elektrodenanordnung ausgeübten Kraft umfasst, um die Elektrodenanordnung (10) zu erhalten.

12. Verfahren nach Anspruch 10, wobei der Schritt (a) in einem Zustand, in dem entweder Unterseite oder Oberseite der Kante (19) abgestützt ist, das Drücken der anderen von Unterseite und Oberseite der Kante (19) in Richtung der Einen umfasst, wenn Elektroden (11) und Separatoren (13) der Elektrodenanordnung (10) in einer vertikalen Richtung senkrecht zum Boden gestapelt sind.

13. Verfahren nach Anspruch 12, wobei ein Punkt, an dem die eine von Unterseite und Oberseite der Kante (19) abgestützt wird, näher an einer Außenseite der Elektrodenanordnung (10) angeordnet ist als ein Punkt t, an dem die andere von Unterseite und Oberseite der Kante (19) gedrückt wird.

## Revendications

1. Appareil pour souder des languettes d'électrode (15) d'une batterie de type poche faisant saillie d'un ensemble électrode (10) les unes vers les autres, l'appareil comprenant :
une partie guide (110) configurée pour regrouper les languettes d'électrode (15) sur une zone de regroupement prédéfinie ;
une partie de soudage (120) configurée pour souder les languettes d'électrode (15) regroupées par la partie guide (110),
**caractérisé en ce qu'**une partie de pliage (130) est présente qui est configurée pour plier l'ensemble électrode (10) de sorte qu'une longueur de l'ensemble électrode (10) à une zone de regroupement (G) augmente dans au moins une partie des languettes d'électrodes (15) avant qu'elles ne soient soudées par la partie de soudage (120).

2. Appareil selon la revendication 1, dans lequel la partie guide (110) est configurée pour regrouper les languettes d'électrode (15) sur la zone de regroupement (G) disposée sous un plan de référence passant à travers un centre de l'ensemble électrode (10) dans une direction verticale, le plan de référence étant parallèle au sol lorsque des électrodes (11) et des séparateurs (13) de l'ensemble électrode (10) sont empilés dans la direction verticale perpendiculaire au sol, et
la partie de pliage (130) est configurée pour plier vers le haut un bord de l'ensemble électrode (10), auquel sont connectées les languettes d'électrode (15).

3. Appareil selon la revendication 1, dans lequel la partie de pliage (130) comprend un bloc support (131) configuré pour supporter l'une des surfaces inférieure ou supérieure de l'ensemble électrode (10) et un bloc de pression (133) configuré pour appuyer sur l'autre des surfaces inférieure ou supérieure de l'ensemble électrode (10) vers celle qui est supportée, lorsque des électrodes (11) et des séparateurs (13) de l'ensemble électrode (10) sont empilés dans une direction verticale perpendiculaire au sol.

4. Appareil selon la revendication 3, dans lequel un point où le bloc support (131) supporte l'une des surfaces inférieure ou supérieure de l'ensemble électrode (10) est disposé plus près d'un extérieur de l'ensemble électrode (10) qu'un point où le bloc de pression (133) appuie sur l'autre des surfaces inférieure et supérieure de l'ensemble électrode (10).

5. Appareil selon la revendication 3, dans lequel le bloc support (131) est configuré pour supporter un bord (19) de l'ensemble électrode (10), auquel sont connectées les languettes d'électrodes (15), par le dessous de l'ensemble électrode (10), et
le bloc de pression (133) est configuré pour exercer une pression descendante sur le bord (19), qui est supporté par le bloc support (131), depuis le dessus de l'ensemble électrode (10) afin d'effectuer un pliage.

6. Appareil selon la revendication 5, dans lequel le bloc support (131) comprend une surface inclinée (131a) dont la hauteur augmente progressivement vers un extérieur de l'ensemble électrode (10) en tant que surface disposée sous le bord (19).

7. Appareil selon la revendication 1, comprenant en outre une partie de positionnement (140) sur laquelle l'ensemble électrode (10) est configuré pour reposer,
dans lequel lorsque des électrodes (11) et des séparateurs (13) de l'ensemble électrode (10) sont empilés dans une direction verticale perpendiculaire au sol, la partie de pliage (230) comprend un bloc de pression (233) disposé à l'intérieur de la partie de positionnement (240) pour faire saillie vers une surface supérieure de la partie de positionnement (240), sur laquelle repose une surface inférieure de l'ensemble électrode (10), de manière à appuyer sur un bord (19) de l'ensemble électrode (10), auquel sont connectées les languettes d'électrodes (15), par le dessous.

8. Appareil selon la revendication 7, dans lequel la partie de pliage (230) comprend en outre un bloc support (231) configuré pour supporter partiellement une surface supérieure de l'ensemble électrode (10) tout en étant pressée par le bloc de pression (233).

9. Appareil selon la revendication 1, dans lequel la partie de pliage (230) comprend un bloc support (231) configuré pour supporter un bord (19) de l'ensemble électrode (10), auquel sont connectées les languettes d'électrodes (15), par le dessous lorsque des électrodes (11) et des séparateurs (13) de l'ensemble électrode (10) sont empilés dans une direction verticale perpendiculaire au sol.

10. Procédé de soudage de languettes d'électrode (15) faisant saillie d'un ensemble électrode (10) les unes vers les autres, le procédé comprenant :
(a) le pliage d'un bord (19) de l'ensemble électrode (10), auquel sont connectées les languettes d'électrodes (15) ; et
(b) le soudage des languettes d'électrode (15) dans un état dans lequel l'ensemble électrode (10) est plié,
dans lequel le procédé comprend en outre :
le regroupement des languettes d'électrode (15) avant l'étape (a) ou entre l'étape (a) et l'étape (b),
dans lequel l'étape (a) de pliage d'un bord (19) de l'ensemble électrode (10) est réalisée de sorte qu'une longueur de l'ensemble électrode (10) à une zone de regroupement (G) augmente dans au moins une partie des languettes d'électrodes (15) avant qu'elles ne soient soudées.

11. Procédé selon la revendication 10, comprenant en outre, après l'étape (b), l'élimination d'une force appliquée à l'ensemble électrode pour plier l'ensemble électrode (10) à l'étape (a) afin que l'ensemble électrode (10) reprenne sa forme initiale.

12. Procédé selon la revendication 10, dans lequel l'étape (a) comprend, dans un état de support de l'une des surfaces inférieure ou supérieure du bord (19), le pression appliquée sur l'autre des surfaces inférieure et supérieure du bord (19) vers celle qui est supportée lorsque des électrodes (11) et des séparateurs (13) de l'ensemble électrode (10) sont empilés dans une direction verticale perpendiculaire au sol.

13. Procédé selon la revendication 12, dans lequel un point où l'une des surfaces inférieure et supérieure du bord (19) est supportée est disposé plus près d'un extérieur de l'ensemble électrode (10) qu'un point où l'autre des surfaces inférieure et supérieure du bord (19) est pressée.
